**Europäisches Patentamt**

**European Patent Office**

**Office européen des brevets**

(19)

(11) Veröffentlichungsnummer: **0 065 633**
**B1**

(12) # EUROPÄISCHE PATENTSCHRIFT

(45) Veröffentlichungstag der Patentschrift:
**04.09.85**

(51) Int. Cl.⁴: **C 08 F 14/06,** C 08 F 2/20

(21) Anmeldenummer: **82102436.1**

(22) Anmeldetag: **24.03.82**

(54) Verfahren zur Herstellung von Polymeren und Copolymeren des Vinylchlorids.

(30) Priorität: **22.05.81 DE 3120358**

(43) Veröffentlichungstag der Anmeldung:
**01.12.82 Patentblatt 82/48**

(45) Bekanntmachung des Hinweises auf die Patenterteilung:
**04.09.85 Patentblatt 85/36**

(84) Benannte Vertragsstaaten:
**BE DE FR GB IT NL SE**

(56) Entgegenhaltungen:
**EP - A - 0 048 842**
**DE - A - 2 227 887**
**DE - B - 1 263 300**

(73) Patentinhaber: **CHEMISCHE WERKE HÜLS AG,
Postfach 1320, D-4370 Marl 1 (DE)**

(72) Erfinder: **Sielfeld, Gilbert, Dr., Lipper Weg 197,
D-4370 Marl (DE)**

ACTORUM AG

## Beschreibung

Zur Herstellung von Polyvinylchloridharzen nach den Suspensionspolymerisationsverfahren wird das Monomere oder das Monomergemisch durch mechanisches Rühren in der wässrigen Phase fein verteilt, mit Hilfe von Schutzkolloiden oder Suspensionsstabilisatoren stabilisiert und in Anwesenheit von Radikalkatalysatoren polymerisiert.

Als Suspensionsstabilisatoren können wasserlösliche natürliche, polymere Stoffe, wie Gelatine, Stärke und dergleichen, wasserlösliche Cellulosederivate, wie Alkylcellulosen, Hydroxialkylcellulosen und dergleichen, wasserlösliche, synthetische Produkte, wie teilverseifte Polyvinylacetate, Copolymere aus Maleinsäureanhydrid und Vinylacetat und auch verschiedene Kombinationen der genannten Stoffe eingesetzt werden.

Polyvinylchloridharze, die mit den genannten Suspensionsstabilisatoren hergestellt werden, führen bei der Weichverarbeitung wegen der unbefriedigenden Weichmacheraufnahme zu Fertigteilen mit einer grossen Anzahl sogenannter Stippen oder Fischungen. Ferner ist, bedingt durch die geringe Kornporosität bzw. kompakte Kornstruktur, das Restmonomere nur aufwendig und schwierig zu entfernen. Um diesen Nachteilen zu begegnen, wurden bereits teilverseifte Polyvinylacetate mit Hydrolysegraden von 20 bis 65 Mol-% und Polymerisationsgraden (Zahlenmittel) von 200 bis 3 000 als Cosuspensionsstabilisatoren in Kombination mit vozugsweise Cellulosederivaten und teilverseiften Polyvinylacetaten mit Hydrolysegraden von über 65 Mol-% zur Verbesserung der Weichmacheraufnahme, der Kornporosität und der Stippigkeit vorgeschlagen (DE-OSS 25 28 950 und 26 29 880).

Obwohl die porositätsverbessernden Mittel die Produkteigenschaften der Harze für die Weichverarbeitung verbessern, besitzen diese aufgrund der mangelhaften Eigenschaften der primären Suspensionsstabilisatoren eine noch unbefriedigende hohe Stippigkeit, insbesondere, wenn das Polyvinylchloridharz mit Weichmachern bei hohen Verarbeitungsgeschwindigkeiten verarbeitet wird. Ausserdem weisen solche Produkte eine noch zu geringe Porosität für eine einfach durchführbare Vinylchloridentgasung zur maximalen Entfernung des nicht umgesetzten Monomers auf.

Bei nach bekannten Verfahren mit den üblichen Suspensionsstabilisatoren hergestellten Polyvinylchloridharzen besteht eine Wechselwirkung zwischen der Porosität und dem Schüttgewicht, und zwar verursacht eine Erhöhung der Porosität zwecks guter Entmonomerisierung eine starke Herabsetzung des Schüttgewichts. Eine Herabsetzung des Schüttgewichts bedeutet jedoch eine Abnahme des Ausstosses an extrudiertem Polyvinylchloridharz.

Diese Nachteile werden überwunden durch ein Verfahren zur Herstellung von Polymeren und Copolymeren des Vinylchlorids, wie es durch die Patentansprüche gekennzeichnet ist. Der Begriff «Suspensionsstabilisator» soll hier stets einen primären Suspensionsstabilisator bezeichnen, welcher mit und ohne Cosuspensionsstabilisator einzusetzen ist.

Es war zwar aus der DE-A-22 27 887 bereits bekannt, Copolymere aus Methyl- und Propyl-Δ2-oxazolinen als Suspensionsstabilisatoren für die Polymerisation von Vinylchlorid einzusetzen, jedoch handelt es sich um Copolymere aus 90 bis 50 Molprozent Methyl-Δ2-oxazolineinheiten und 10 bis 50 Molprozent Propyl-Δ2-oxazolineinheiten. Das mit Hilfe solcher Suspensionsstabilisatoren erzeugte Polyvinylchlorid zeigt ein kompaktes unporöses Korn und ergibt klare Lackfilme.

Erfindungsgemäss bestand hingegen die Aufgabe, ein PVC herzustellen, das für die Weich-Verarbeitung geeignet ist und daher eine hohe Porosität und eine hohe Weichmacheraufnahme zeigt. Es war somit überraschend, dass diese – der DE-A-22 27 887 entgegengesetzte – Aufgabenstellung mit dem Einsatz von Copolymeren aus Methyl- und Isopropyl-Δ2-oxazolinen als Suspensionsmittel erfindungsgemäss zu lösen war.

Die ältere Anmeldung EP-A-48 842 (Art. 54(3) EPÜ) beschreibt zwar ein Verfahren zur Herstellung von Vinylchloridharzen, in welchem Copolymere aus 2-Propyl-Δ2-oxazolin und 2-Methyl-Δ2-oxazolin, zum Teil gleicher Zusammensetzung wie im erfindungsgemässen Verfahren, eingesetzt werden; gemäss EP-A-48 842 sind jedoch stets wenigstens zwei Suspensionsstabilisatoren anwesend, nämlich teilhydrolysierte Polyvinylacetate oder Celluloseether und 2-Propyl-Δ2-oxazolin-Copolymere. Im vorliegenden Verfahren ist jedoch nur ein Suspensionsstabilisator anwesend (Anspruch 1), oder der Celluloseether bzw. das teilhydrolysierte Polyvinylacetat sind in geringeren Mengen zugegen als gemäss EP-A-48 842 (Anspruch 2).

Die erfindungsgemäs einzusetzenden 2-Isopropyl-Δ2-oxazolin-Copolymeren haben eine Viskositätszahl von 35 bis 80 ml/g, vorzugsweise 45 bis 70 ml/g, gemessen bei 25 °C in einem Isopropanol/Wasser-Gemisch (50 Volumenprozent Isopropanol) in einer Konzentration von 0,5% (Gewicht/Volumen der Lösung). Sie können hergestellt werden gemäss DE-PS 12 63 300 oder nach der Verfahrensweise, welche unter Beispiel 1a beschrieben wird.

Brauchbare Cosuspensionsstabilisatoren sind die üblicherweise eingestzten wasserlöslichen hochmolekularen Verbindungen, wie teilverseifte Polyvinylacetate oder Cellulosederivate. Die teilverseiften Polyvinylacetate bzw. Polyvinylalkohole können einen Verseifungsgrad von bis zu 90 Mol-% haben. Als Cellulosederivate können Methyl-, Methylhydroxiethyl-, Methylhydroxipropyl, Hydroxylpropyl-, Hydroxipropylcellulosen und auch verschiedene Kombinationen der genannten Cosuspensionsstabilisatoren eingesetzt werden.

Die hochmolekularen Cosuspensionsstabilisatoren werden gewöhnlich in Konzentrationen zwischen 0,005 und weniger als 0,02 Gewichtsprozent, bezogen auf das zu polymerisierende Monomere, eingesetzt. Methyl-, Methylhydroxipropyl-, Methylhydroxiethyl- oder Hydroxiethyloder Hydroxipropylcellulose mit einer Viskosität von 12 bis 120 mPa·s, gemessen in 2gewichtsprozentiger wässriger Lösung bei 20 °C, oder teilverseiftes Polyvinylacetat mit einem Hydrolysegrad von 65 bis 90 Mol-% und einer Viskosität von 2 bis 50 mPa·s, gemessen in 4gewichtsprozentiger wässriger Lösung bei 20 °C, werden vorzugsweise in Mengen zwischen 0,005 und 0,01 Gewichtsprozent, bezogen auf das Monomere, eingesetzt.

Weitere brauchbare Cosuspensionsstabilisatoren sind öllösliche hochmolekulare Stoffe, wie z.B. teilverseifte Polyvinylacetate mit einem Hydrolysegrad zwischen 20 und 65 Mol-%. Sie werden gewöhnlich in Konzentrationen bis zu 0,5 Gewichtsprozent, bezogen auf das Monomere, eingesetzt. Allein oder in Kombination mit diesen öllöslichen Polyvinylacetaten können auch niedermolekulare Emulgatoren mit HLB-Werten zwischen 2 und 20 eingesetzt werden. Emulgatoren werden gewöhnlich in Konzentrationen bis zu 1 Gewichtsprozent, bezogen auf das Monomere, eingesetzt.

Die Menge der erfindungsgemäss einzusetzenden Oxazolin-Copolymeren hängt von der Art und Menge der gegebenenfalls mit zu verwendenden Cosuspensionsstabilisatoren ab, und variiert im Bereich von 0,1 bis 0,5 Gewichtsprozent, vorzugsweise 0,1 bis 0,3 Gewichtsprozent, bezogen auf das Gewicht des zu polymerisierenden Polymers.

Als Katalysatoren können die bekannten monomerlöslichen Radikalkaltalysatoren verwendet werden. Erwähnt werden sollen: Diacylperoxide, wie z.B. 2.4-Dichlorbenzoyl-, Dibenzoyl-, Dilaurylperoxid, Peroxidicarbonate, wie z.B. Diisopropyl-, Di-2-ethylhexyl-, Dicyclohexyl-, Dicetylperoxidicarbonat, Alkylperester, wie z.B. t-Butyl-perpivalat, t-Butyl-perbenzoat, Azoverbindungen, wie z.B. Azodiisobuttersäuredinitril und schliesslich gemischte Anhydride organischer Sulfopersäuren und Carbonsäuren, wie beispielsweise Acetylcyclohexylsulfonylperoxid. Die Katalysatoren können allein oder in Mischung eingesetzt werden, wobei man üblicherweise Mengen von 0,01 bis 0,3 Gewichtsprozent, vorzugsweise 0,01 bis 0,15 Gewichtsprozent, bezogen auf das Monomere, einsetzt.

Die Polymerisation kann bei üblichen Temperaturen zwischen 30 und 75 °C, vorzugsweise 40 bis 70 °C, durchgeführt werden.

Als nichtionogene Emulgatoren mit einem HLB-Wert (hydrophilic/lipophilic-Balance) zwischen 2 und 20 lassen sich beispielsweise einsetzen: Sorbitan-Monolaurat, Sorbitan-Monostearat, Sorbitan-Monopalmitat, Polyoxyethylen-Sorbitan-Monostearat, Polyoxyethylen-Sorbitan-Monolaurat.

Der Einsatz von bis zu 20 Gewichtsprozent an Comonomeren zur Herstellung von Mischpolymerisaten ist möglich. Beispiele brauchbarer Comonomerer sind Vinylester, wie Vinylacetat, Vinylidenhalogenide, wie Vinylidenchlorid, Acrylsäure- und Methacrylsäurealkylester mit 1 bis 18 Kohlenstoffatomen im Alkylrest, wie die Methyl-, n-Butyl- und Laurylester und schliesslich Monoolefine, wie Ethylen oder Propylen.

Zur weiteren Erläuterung der Erfindung dienen die folgenden Beispiele. Die angegebenen Teile sind Gewichtsteile.

Beispiel 1a
    Herstellung des Polyoxazolin-Copolymers
    In einen mit Wendelrührer ausgestatteten Glasautoklaven mit Heizmantel wurden bei Raumtemperatur und unter Stickstoffstrom folgende Produkte gegeben:
        500 ml 2-Isopropyl-Δ2-oxazolin
        100 ml 2-Methyl-Δ2-oxazolin
        200 ml p-Xylol
    Unter Rühren wurden anschliessend 25,5 ml einer 0,1 molaren Lösung von p-Toluolsulfonsäuremethylester in p-Xylol zugegeben. Der Druck wurde auf einen Gesamtdruck von 1,5 bar und der am Heizmantel angeschlossene Thermostat auf 150 °C eingestellt. Innerhalb einer Aufheizzeit von 10 Minuten erreichte die Innentemperatur der Reaktion 150 °C.

    Nach Druckausgleich wurden 700 ml Isopropylalkohol eingefahren. Anschliessend wurde die homogene, hochviskose Lösung bei 85 °C und einem Gesamtdruck von 1,5 bar in eine Aufarbeitungsapparatur, in der 3 Liter Hexan vorgelegt wurden, gedrückt. Nach 1/2stündigem Rühren wurde noch 1 Liter Hexan zugegeben. Die Produktphase wurde von der Lösungsmittelphase getrennt, mit Methylenchlorid nachgespült und bei 60 °C 12 Stunden lang getrocknet. Das so erhaltene Produkt wurde als Suspensionsstabilisator zur Suspensionspolymerisation von Vinylchlorid nach Beispiel 1b und 1c eingesetzt. Die Viskositätszahl des Produktes betrug 52 (ml/g), gemessen bei 25 °C in einem Isopropanol/Wasser-Gemisch (50 Volumenprozent Isopropanol) in einer Konzentration von 0,5% (Gewicht/Volumen der Lösung). Das Copolymere enthielt 78 Molprozent 2-Isopropanol-Δ2-oxazolin und 22 Molprozent 2-Methyl-Δ2-oxazolin.

Beispiel 1b
    Ein 40 Liter-Polymerisationsautoklav aus rostfreiem Stahl wurde mit folgenden Bestandteilen beschickt: 20 000 Teile Wasser, 20 Teile des nach Beispiel 1a hergestellten Polyoxazolin-Copolymers, 9,30 Teile Di-cetylperoxidicarbonat, 11 Teile Dilauroylperoxid und 4 Teile Ammoniumhydrogencarbonat. Der Autoklav wurde geschlossen, mit Stickstoff gespült, evakuiert und anschliessend mit 10 000 Teilen Vinylchlorid beschickt. Danach wurde 6 Stunden bei einer Temperatur von 54 °C bis zu einem Druck von 5 bar polymerisiert. Die Produkte wurden anschliessend vom grössten Teil des Suspensionswassers getrennt und bei 50 °C in einem Wirbelbetttrockner getrocknet.

    Wie aus Tabelle I zu entnehmen ist, fällt ein Polyvinylchloridharz mit sehr hoher Porosität bei verhältnismässig hoher Schüttdichte, niedriger Stippigkeit sowohl mit Dioctylphthalat als auch mit hochviskosem Polymerweichmacher und mit hohem spezifischen Durchgangswiderstandswerten an.

Vergleichsversuch A

Es wurde wie in Beispiel 1 b verfahren, jedoch wurde anstelle des erfindungsgemäss eingesetzten Polyoxazolin-Copolymers die gleiche Menge eines teilverseiften Polyvinylacetats mit einem Hydrolysegrad von ca. 74 Mol-% und einer Viskosität von ca. 2,8 mPa·s (gemessen in einer 4gewichtsprozentigen wässrigen Lösung bei 20 °C) als Suspensionsstabilisator eingesetzt.

Wie aus Tabelle I zu entnehmen ist, weist das so hergestellte Polyvinylchloridharz eine sehr hohe Stippigkeit und verhältnismässig geringe Porosität auf.

Vergleichsversuch B

Es wurde wie in Beispiel 1 b verfahren, jedoch wurde anstelle des erfindungsgemäss eingesetzten Polyoxazolin-Copolymers die gleiche Menge eines teilverseiften Polyvinylacetats mit einem Hydrolysegrad von 69 bis 73 Mol-% und einer Viskosität von 3,5 bis 5,5 mPa·s (gemessen in einer 4gewichtsprozentigen wässrigen Lösung bei 20 °C) als Suspensionsstabilisator eingesetzt.

Wie aus Tabelle I zu entnehmen ist, besitzt auch dieses Produkt eine sehr hohe Stippigkeit und eine geringe Porosität.

Vergleichsversuch C

Es wurde wie in Beispiel 1 b verfahren, jedoch wurde anstelle des erfindungsgemäss eingesetzten Polyoxazolin-Copolymers 10 Gewichtsteile einer Hydroxipropyl-Methylcellulose mit einem Methoxyl-Substitutionsgrad von 1,86 bis 1,90, einer Propylenglykolether-Substitution von 0,22 bis 0,25 und einer Viskosität von ca. 15 mPa·s (gemessen in einer 2gewichtsprozentigen wässrigen Lösung bei 20 °C) eingesetzt.

Wie aus Tabelle I zu entnehmen ist, weist das so hergestellte Prolyvinylchlorid eine sehr hohe Stippigkeit und eine niedrige Porosität auf.

Beispiel 1 c

Es wurde wie in Beispiel 1 b verfahren, jedoch wurden neben dem erfindungsgemäss eingesetzten Polyoxazolin-Copolymer 20 Teile einer 25gewichtsprozentigen methanolischen Lösung eines Polyvinylalkohols mit einer Verseifungszahl von 437 und einer Viskositätszahl von 14 (ml/g), gemessen in einer 0,5prozentigen Lösung in einem Methanol/Wasser-Gemisch (50 Volumenprozent) bei 20 °C, als Cosuspensionsstabilisator eingesetzt.

Wie aus Tabelle I zu entnehmen ist, besitzt das so hergestellte Polyvinylchlorid eine sehr hohe Porosität bei verhältnismässig hoher Schüttdichte, eine hohe Weichmacheraufnahmegeschwindigkeit und eine sehr geringe Stippigkeit.

Vergleichsversuch D (gemäss DE-OS 26 29 880)

Es wurde wie in Beispiel 1 c verfahren, jedoch wurden anstelle des erfindungsgemäss eingesetzten Polyoxazolin-Copolymers 20 Teile eines Polyvinylalkohols mit einem Hydrolysegrad von 72,5 bis 75,5 Mol-% mit einer Viskosität von 4 bis 6 mPa·s, gemessen in einer 5prozentigen wässrigen Lösung bei 20 °C, als Suspensionsstabilisator eingesetzt.

Wie aus Tabelle I zu entnehmen ist, weist das so hergestellte Polyvinylchloridharz eine sehr hohe Stippigkeit auf.

Vergleichsversuch E (gemäss DE-OS 25 28 950)

Es wurde wie in Beispiel 1 c verfahren, jedoch wurden anstelle des erfindungsgemäss eingesetzten Polyoxazolin-Copolymers 12 Teile der in Vergleichsversuch C eingesetzten Hydroxipropylmethylcellulose als Suspensionsstabilisator eingesetzt.

Wie aus Tabelle I zu entnehmen ist, weist das so hergestellte Polyvinylchloridharz eine noch unbefriedigend hohe Stippigkeit und eine unerwünscht niedrige Porosität auf.

Tabelle I

| | Korngrössenverteilung stand in Gew.-% bei folgenden Maschenweiten | | | | Siebrückfolgenden | Schüttdichte[1] (g/l) | Weichmacheraufnahme[3] g DOP[2] 100 g PVC | Bewertung der Fischaugen-DOP als WM[4] Schneckendrehzahl | | Schüttdichte Weich-Mischg.[8] [g/l] | Ausstoss[5] [g/min] | | Bewertung der Fischaugen m. Polymer-WM[6] | | | Spezifischer Durchgangswiderstand[7] (Ω·cm) bei | |
| --- | --- | --- | --- | --- | --- | --- | --- | --- | --- | --- | --- | --- | --- | --- | --- | --- | --- |
| | 63 µm | 100 µm | 160 µm | 200 µm | 250 µm | | | 40 upm | 80 upm | | 40 upm | 80 upm | 20 upm | 40 upm | 80 upm | 23 °C | 70 °C |
| Beispiel 1 b | 98 | 93 | 50 | 22 | 2,8 | 460 | 40,0 | 2 | 2–3 | 480 | 35,3 | 70,1 | 3 | 3,5 | 4,0 | $147 \cdot 10^{13}$ | $12,3 \cdot 10^{11}$ |
| Vergleichsversuch A | 100 | 88 | 68 | 32 | 6,4 | 508 | 28,8 | >5 | >5 | 493 | 31,5 | 70,8 | 6 | 6 | >6 | $103 \cdot 10^{13}$ | $6,4 \cdot 10^{11}$ |
| Vergleichsversuch B | 99 | 93 | 39 | 1,7 | 1,2 | 486 | 25,0 | 5 | >5 | 461 | 43,3 | 71,5 | >6 | >6 | >6 | $99 \cdot 10^{13}$ | $4,5 \cdot 10^{11}$ |
| Vergleichsversuch C | 94 | 72 | 5,2 | 0,2 | | 505 | 25,7 | >5 | >5 | 485 | 45,7 | 77,3 | >6 | >6 | >6 | $120 \cdot 10^{13}$ | $6 \cdot 10^{11}$ |
| Beispiel 1 c | 100 | 89 | 11 | 1,5 | 0,8 | 452 | 40,2 | 1 | 2–3 | – | 40,8 | 71,0 | 3 | 3,5 | 4,0 | $115 \cdot 10^{13}$ | $10,5 \cdot 10^{11}$ |
| Vergleichsversuch D | 95 | 58 | 0,3 | | | 444 | 32,0 | 4,5 | 5 | 437 | 42 | 69,4 | >6 | >6 | >6 | $73 \cdot 10^{13}$ | $4,5 \cdot 10^{11}$ |
| Vergleichsversuch E | 97 | 74 | 5,0 | 1,4 | | 462 | 30,3 | 3–4 | >5 | 463 | 41,4 | 74,3 | >6 | >6 | >6 | $90 \cdot 10^{13}$ | $3,9 \cdot 10^{11}$ |

Fortsetzung der Tabelle I

[1]nach DIN 53 468

[2]DOP = Di-2-ethylhexylphthalat

[3]nach DIN 53 417/1 (Zentrifugierverfahren – ist ein Mass für die Kornporosität)

[4]Prüfmethode mit DOP als Weichmacher. Vergleich mit Standard-Proben, wobei eine 5 eine extrem hohe Anzahl, 3–4 eine mittlere Anzahl und 1 eine extrem niedrige Anzahl Fischaugen oder Stippen bedeuten. Die Zahlen dazwischen sind entsprechende Zwischenabstufungen. Die angegebenen Werte sind Mittelwerte aus mehreren Beurteilungen aus Blasfolien, die bei den zwei angegebenen Schneckendrehzahlen extrudiert wurden. Prüfrezeptur: 100 Teile PVC, 42,9 Teile DOP, 4,76 Teile Nuostab V 1204 und 0,76 Teile LOXIOL G 40.

[5]Ausstoss der nach Punkt 4 extrudierten Mischungen.

[6]Prüfmethode mit einem hochviskosen polymeren Adipinsäureester als Weichmacher. Vergleich mit Standard-Proben, wobei 6 eine extrem hohe Anzahl, 3,5 eine mittlere und 1 eine extrem niedrige Anzahl Fischaugen oder Stippen bedeuten. Die Zahlen dazwischen sind entsprechende Zwischenabstufungen. Die angegebenen Werte sind Mittelwerte aus mehreren Beurteilungen von Blasfolien, die bei den drei angegebenen Schneckendrehzahlen extrudiert wurden. Prüfrezeptur: 70 Teile PVC, 30 Teile Witamol 621, 4 Teile Nuostab V 1204, 0,2 Teile LOXIOL G 40.

[7]nach DIN 53 482

[8]Schüttdichte der Weichmischung hergestellt nach der unter Punkt 4 angegebenen Rezeptur.

Wie aus Tabelle I klar zu ersehen ist, erbringt die erfindungsgemässe Massnahme in überraschender Weise eine deutlich geringe Fischaugenzahl und eine in ansehnlicher Weise gesteigerte Weichmacheraufnahme, verglichen mit dem relevanten Stand der Technik. Da die Weichmacheraufnahme ein Mass für die Porosität des Polymeren darstellt, ist gleichzeitig die Gewähr für eine überraschend leichte Entfernbarkeit des Restmonomeren gegeben. Ferner ist auch das Verhältnis Weichmacheraufnahme: Schüttdichte erfindungsgemäss deutlich günstiger als beim nächstliegenden Stand der Technik.

**Patentansprüche**

1. Verfahren zur Herstellung von Polymeren und Copolymeren des Vinylchlorids durch Suspensionspolymerisation unter Verwendung eines Suspensionsstabilisators in Gegenwart von monomerlöslichen Radikalkatalysatoren und gegebenenfalls von pH-Puffersystemen, dadurch gekennzeichnet, dass man als primären Suspensionsstabilisator 0,1 bis 0,5 Gewichtsprozent, bezogen auf das Monomere, eines Copolymers mit 65 bis 85 Molprozent 2-Isopropyl-Δ2-oxazolin und 35 bis 15 Molprozent 2-Methyl-Δ2-oxazolin mit einer Viskositätszahl von 35 bis 80 ml/g, gemessen bei 25 °C in einem Isopropanol/Wasser-Gemisch (50 Volumenprozent Isopropanol) in einer Konzentration von 0,5% (Gewicht/Volumen der Lösung) ohne Cosuspensionsstabilisator verwendet.

2. Verfahren zur Herstellung von Polymeren und Copolymeren des Vinylchlorids durch Suspensionspolymerisation unter Verwendung eines Suspensionsstabilisators in Gegenwart von monomerlöslichen Radikalkatalysatoren und gegebenenfalls von pH-Puffersystemen, dadurch gekennzeichnet, dass man als primären Suspensionsstabilisator 0,1 bis 0,5 Gewichtsprozent, bezogen auf das Monomere, eines Copolymers mit 65 bis 85 Molprozent 2-Isopropyl-Δ2-oxazolin und 35 bis 15 Molprozent 2-Methyl-Δ2-oxazolin mit einer Viskositätszahl von 35 bis 80 ml/g, gemessen bei 25 °C in einem Isopropanol/Wasser-Gemisch (50 Volumenprozent Iropropanol) in einer Konzentration von 0,5% (Gewicht/Volumen der Lösung) verwendet, und als Cosuspensionsstabilisator 0,005 bis 0,50 Gewichtsprozent, bezogen auf das Monomere, eines teilverseiften Polyvinylacetats mit einem Hydrolysegrad zwischen 20 und 65 Molprozent und einem Polymerisationsgrad (Zahlenmittel) von 200 bis 3 000, oder zwischen 0,005 und weniger als 0,02 Gewichtsprozent, bezogen auf das Monomere, Methyl-, Methylhydroxypropyl-, Methylhydroxyethyl- oder Hydroxyethyl- oder Hydroxypropylcellulose mit einer Viskosität von 12 bis 120 mPa·s, gemessen in 2gewichtsprozentiger wässriger Lösung bei 20 °C, oder zwischen 0,005 und weniger als 0,02 Gewichtsprozent, bezogen auf das Monomere, eines teilverseiften Polyvinylacetats mit einem Hydrolysegrad von 65 bis 90 Molprozent und einer Viskosität von 2 bis 50 mPa·s, gemessen in 4gewichtsprozentiger wässriger Lösung bei 20 °C, einsetzt.

3. Verfahren nach den Ansprüchen 1 und 2, dadurch gekennzeichnet, dass in Gegenwart von 0,01 bis 1% eines oder mehrerer nichtionischer Emulgatoren mit einem HLB-Wert zwischen 2 und 20 polymerisiert wird.

**Revendications**

1. Procédé pour la préparation de polymères et copolymères du chlorure de vinyle par polymérisation en suspension avec utilisation d'un stabilisateur de suspension, en présence de catalyseurs à radicaux solubles dans le monomère et éventuellement de systèmes de tampon du pH, caractérisé par le fait que l'on utilise, comme stabilisateur primaire de suspension, de 0,1 à 0,5% en poids, relativement au monomère, d'un copolymère contenant de 65 à 85 mol% de 2-isopropyl-Δ2-oxazoline et de 35 à 15 mol% de 2-méthyl-Δ2-oxazoline, ayant un indice de viscosité de 35 à 80 ml/g, mesuré à 25 °C dans un mélange d'isopropanol et d'eau (50% en volume d'isopropanol), à une concentration de 0,5% (poids/volume de la solution), sans co-stabilisateur de suspension.

2. Procédé pour la préparation de polymères et copolymères du chlorure de vinyle par polymérisation en suspension avec utilisation d'un stabilisateur de suspension, en présence de catalyseurs à radicaux solubles dans le monomère et éventuellement de systèmes de tampon du pH, caractérisé par le fait que l'on utilise, comme stabilisateur primaire de suspension, de 0,1 à 0,5% en poids, relativement au monomère, d'un copolymère contenant de 65 à 85 mol% de 2-isopropyl-$\Delta$2-oxazoline et de 35 à 15 mol% de 2-méthyl-$\Delta$2-oxazoline, ayant un indice de viscosité de 35 à 80 ml/g, mesurée à 25 °C dans un mélange d'isopropanol et d'eau (50% en volume d'isopropanol) à une concentration de 0,5% (poids/volume de la solution), et comme co-stabilisateur de suspension, de 0005 à 0,50% en poids, relativement au monomère, d'un polyacétate de vinyle partiellement saponifié présentant un degré d'hydrolyse de 20 à 65 mol% et un degré de polymérisation (moyenne en nombre) de 200 à 3000, ou de 0,005 à moins de 0,02% en poids, relativement au monomère, de méthyl-cellulose, de méthyl-hydroxy-propyl-cellulose, de méthyl-hydroxy-éthyl-cellulose ou d'hydroxy-éthyl-cellulose ou d'hydroxy-propyl-cellulose, ayant une viscosité de 12 à 120 mPa·s, mesurée en solution aqueuse à 2% en poids à 20 °C, ou de 0,005 à moins de 0,02% en poids, relativement au monomère, d'un polyacétate de vinyle partiellement saponifié ayant un degré d'hydrolyse de 65 à 90 mol% et une viscosité de 2 à 50 mPa·s, mesurée en solution aqueuse à 4% en poids à 20 °C.

3. Procédé selon les revendications 1 et 2, caractérisé par le fait que l'on polymérise en présence de 0,01 à 1% d'un ou plusieurs émulsifiants non-ioniques ayant une valeur EHL de 2 à 20.

**Claims**

1. A process for the production of a homopolymer or copolymer of vinyl chloride by suspension polymerisation using a suspension stabiliser in the presence of a monomersoluble free radical catalyst and optionally a pH buffer system, characterised in that there is used as primary suspension stabiliser 0.1 to 0.5 wt%, based on the monomer(s), of a copolymer of 65 to 85 mol% 2-isopropyl-$\Delta$2-oxazoline and 35 to 15 mol% 2-methyl-$\Delta$2-oxazoline having a viscosity number of 35 to 80 ml/g, measured at 25 °C in an isopropanol/water mixture (50 vol% isopropanol) at a concentration of 0.5% (weight/volume of solution), without the use of a costabiliser for the suspension.

2. A process for the production of a homopolymer or copolymer of vinyl chloride by suspension polymerisation using a suspension stabiliser in the presence of a monomersoluble free radical catalyst and optionally a pH buffer system, characterised in that there is used as primary suspension stabiliser 0.1 to 0.5 wt%, based on the monomer(s), of a copolymer of 65 to 85 mol% 2-Isopropyl-$\Delta$2-oxazoline and 35 to 15 mol% 2-methyl-$\Delta$2-oxazoline having a viscosity number of 35 to 80 ml/g, measured at 25 °C in an isopropanol/water mixture (50 vol% isopropanol) at a concentration of 0.5% (weight/volume of solution), and there is added as co-stabiliser for the suspension either 0.005 to 0.5 wt%, based on the monomer(s), of a partially saponified polyvinyl acetate having a degree of hydrolysis of 20 to 65 mol% and a degree of polymerisation (number average) of 200 to 3,000, or 0.005 to less than 0.02 wt%, based on the monomer(s), of methyl-, methylhydroxypropyl-, methylhydroxyethyl-, hydroxyethyl- or hydroxypropyl-cellulose having a viscosity of 12 to 120 mPa·s, measured in 2 wt% aqueous solution at 20 °C, or 0.005 to less than 0.02 wt%, based on the monomer(s), of a partially saponified polyvinyl acetate having degree of hydrolysis of 65 to 90 mol% and a viscosity of 2 to 50 mPa·s, measured in 4 wt% aqueous solution at 20 °C.

3. A process according to claim 1 or 2, characterised in that the polymerisation is carried out in the presence of 0.01 to 1% of one or more nonionic emulsifiers having an HLB value from 2 to 20.